# EUROPEAN PATENT SPECIFICATION

(11) **EP 3 536 534 B1**
(45) Date of publication and mention of the grant of the patent: **06.05.2026**
(21) Application number: 18020090.9
(22) Date of filing: 07.03.2018
(51) Int. Cl.: B60K 35/28, B60K 35/29, B60K 35/65, B60K 35/85

(54) **AUTONOMOUS VEHICLE**
AUTONOMES FAHRZEUG
VÉHICULE AUTONOME

(43) Date of publication of application: 11.09.2019
(73) Proprietor: Dr. Ing. h.c. F. Porsche AG, 70435 Stuttgart (DE)
(72) Inventor: Foligno, Mark, 10245 Berlin (DE)

(56) References cited:
- EP-A1- 3 240 258
- WO-A1-2017/018844
- CN-A- 106 128 323
- DE-A1- 102016 003 019
- US-A1- 2014 207 338

## Description

The present invention pertains to an autonomous, that is, self-driving vehicle.

### Background art

. Vehicular automation as per the state of the art involves the use of mechatronics, artificial intelligence, and multi-agent systems to assist a vehicle's operator. A vehicle using automation for difficult tasks, especially navigation, is generally referred to as semi-autonomous. Consequently, a vehicle capable of sensing its environment and navigating without human input, relying solely on automation, is referred to as robotic or autonomous.

DE102016008874, US2015321606, US2017276494, and WO2017018844 disclose autonomous vehicles that apply so-called augmented reality (AR) or virtual reality (VR) on a window of the vehicle.

WO 2017/018844 A1 (SAMSUNG ELECTRONICS CO LTD [KR]) 2 February 2017 (2017-02-02) and US 2014/207338 A1 (HEALEY JENNIFER A [US] ET AL) 24 July 2014 (2014-07-24) each disclose an autonomous vehicle comprising transparent displays for perception by a passenger of the vehicle, the displays being adapted to visually at least augment an environment of the vehicle by content customized to the passenger.

DE 10 2016 003019 A1 (AUDI AG [DE]) 14 September 2017 (2017-09-14) discloses a display system for a motor vehicle that comprises a display device for displaying content on an at least partially transparent display surface and a control device which is designed to adjust the transparency of the displayed content as a function of a detected operating mode or driving situation of the motor vehicle.

CN 106 128 323 A (ZHUOPAN CO LTD) 16 November 2016 (2016-11-16) discloses a car window virtual reality display system and aims at solving the problem that existing compartment multimedia systems are insufficient in immersion and interactivity. The car window virtual reality display system comprises a host system, a car window display device and a sensing system; through the sensing system, the host system can acquire the space motion state quantity of a compartment in real time, render a corresponding dynamic scene image according to the space motion state quantity of the compartment and transmit the scene image to a car window display screen at the corresponding position in the car window display device for display.

EP 3 240 258 A1 (BAIDU USA LLC [US]) 1 November 2017 (2017-11-01) discloses the subject-matter of the preamble of the claim.

### Disclosure of the invention

The invention provides an autonomous vehicle as per the independent claim.

An advantage of the invention lies in its potential to lift a passenger's spirits.

Embodiments of the invention are set out in the dependent claims.

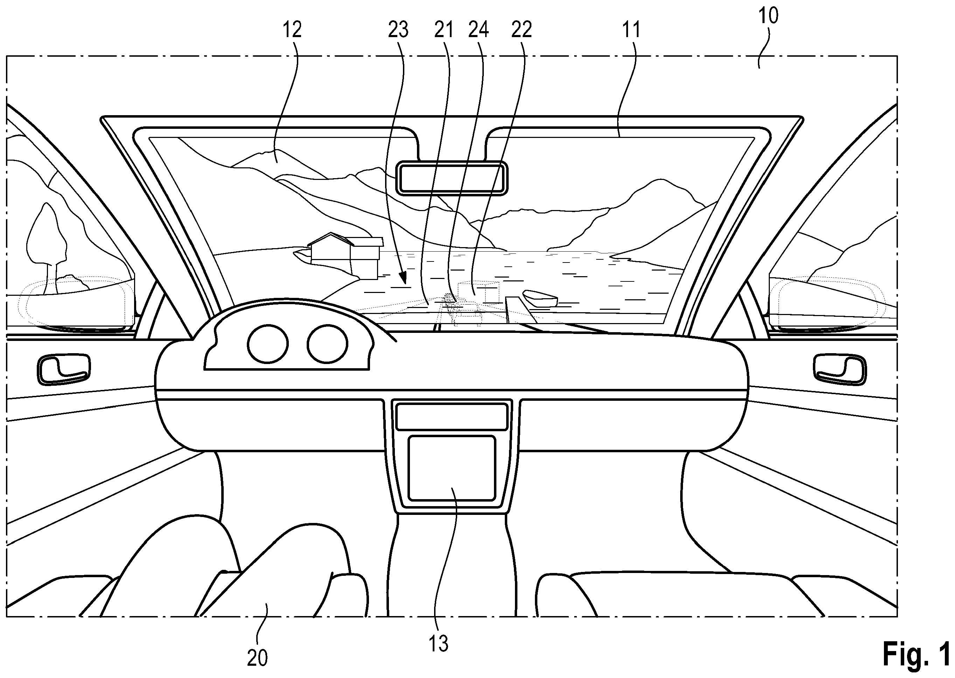

### Brief description of the drawing

The sole figure shows a use case of the invention.

### Embodiment of the invention

The figure illustrates a fully autonomous vehicle (10) wherein the interior's traditional glass screens are replaced with transparent displays (11) which augment reality by overlaying relevant content (12) onto the real world or entirely replace it with virtual content (12). A suitable glass or glazing for such displays (11) is known in the field of thin-film optics as "smart glass" and may take the form of, inter alia, an electrochromic, photochromic, thermochromic, suspended particle, micro-blind, or polymer dispersed liquid crystal device. This way, the displays (11) change the way the passenger (20) perceives his or her environment (23) whilst in motion.

Of the many applications of such capability in the autonomous vehicle (10), the figure elucidates one striking example where the vehicle (10) effectively transforms the daily commute of the passenger (20). In the embodiment of the invention, the vehicle (10) is aware of specific mobility and personal preferences of the passenger (20) mapped to a user identification (ID), and hence knows the destination, route (21), and travel time of the passenger (20) on this journey. The vehicle (10) further knows some of his or her personal interests or hobbies that have been recorded previously.

According to the invention, vehicle (10) retrieves a profile stored on a server within the metaphorical "cloud" which indicates that the passenger (20) enjoys scenic country drives on the weekend as he or she considers them relaxing. In view of such preference, the vehicle's on-board computer (13) replaces the depressing view of an urban environment (23) with poor traffic (24) and weather conditions with a simulated view of that natural scenery, thus masking the perceivably negative environment (23) of the vehicle (10). Instead, the vehicle (10) offers a self-contained and immersive projected landscape to positively affect the mood of the passenger (20) prior to arrival at his or her workplace (22).

## Claims

1. Autonomous vehicle (10),
wherein
- the vehicle (10) comprises transparent displays (11) for perception by a passenger (20) of the vehicle (10),
- the displays (11) are adapted to visually at least augment an environment (23) of the vehicle (10) by a simulated scene (12) customized to the passenger (20),
- the displays (11) are adapted such that the scene (12) visually replaces the environment (23),
- the vehicle (10) is adapted such that the scene (12) is updated whilst the vehicle (10) moves, and
- the scene (12) is simulated based on a profile of the passenger (20) stored on a server external to the vehicle (10), the profile comprising mobility or personal preferences associated with a user identifier of the passenger (20), interests, and hobbies of the passenger (20),
**characterized in that**
- the preferences encompass a natural scenery preferred by the passenger (20), whereby the vehicle (10) is further aware of specific mobility preferences of the passenger (20) mapped to the passenger's profile, and hence knows the destination, route (21), and travel time of the passenger (20) on the journey, whereby the scene (12) is simulated based on these preferences.

## Patentansprüche

1. Autonomes Fahrzeug (10),
wobei
- das Fahrzeug (10) transparente Anzeigen (11) zur Wahrnehmung durch einen Insassen (20) des Fahrzeugs (10) umfasst,
- die Anzeigen (11) so ausgelegt sind, dass sie eine Umgebung (23) des Fahrzeugs (10) durch eine simulierte Szene (12), die an den Insassen (20) angepasst ist, visuell zumindest erweitern,
- die Anzeigen (11) so ausgelegt sind, dass die Szene (12) die Umgebung (23) visuell ersetzt,
- das Fahrzeug (10) so ausgelegt ist, dass die Szene (12) aktualisiert wird, während sich das Fahrzeug (10) bewegt, und
- die Szene (12) basierend auf einem Profil des Insassen (20) simuliert wird, das auf einem Server außerhalb des Fahrzeugs (10) gespeichert ist, wobei das Profil Mobilitätspräferenzen oder persönliche Präferenzen umfasst, die mit einer Benutzerkennung des Insassen (20), Interessen und Hobbys des Insassen (20) verbunden sind,
**dadurch gekennzeichnet, dass**
- die Präferenzen eine natürliche Szenerie umfassen, die von dem Insassen (20) bevorzugt wird, wobei das Fahrzeug (10) ferner bestimmte Mobilitätspräferenzen des Insassen (20) erkennt, die dem Profil des Insassen zugeordnet sind, und somit den Zielort, die Route (21) und die Reisezeit des Insassen (20) auf der Reise kennt, wobei die Szene (12) basierend auf diesen Präferenzen simuliert wird.

## Revendications

1. Véhicule autonome (10),
dans lequel
- le véhicule (10) comprend des affichages transparents (11) pour la perception par un passager (20) du véhicule (10),
- les affichages (11) sont adaptés pour au moins augmenter visuellement un environnement (23) du véhicule (10) par une scène simulée (12) personnalisée en fonction du passager (20),
- les affichages (11) sont adaptés de telle sorte que la scène (12) remplace visuellement l'environnement (23),
- le véhicule (10) est adapté de telle sorte que la scène (12) est mise à jour pendant que le véhicule (10) se déplace, et
- la scène (12) est simulée sur la base d'un profil du passager (20) stocké sur un serveur externe au véhicule (10), le profil comprenant une mobilité ou des préférences personnelles associées à un identifiant d'utilisateur du passager (20), des intérêts et des loisirs du passager (20),
**caractérisé en ce que**
- les préférences englobent un décor naturel préféré par le passager (20), moyennant quoi le véhicule (10) est en outre informé des préférences de mobilité propres au passager (20) mappées au profil du passager, et donc connaît la destination, l'itinéraire (21) et le temps de trajet du passager (20) sur le voyage, moyennant quoi la scène (12) est simulée sur la base de ces préférences.
